# DEMANDE DE BREVET EUROPEEN

(11) **EP 1 570 915 A1**
(43) Date de publication de la demande: **07.09.2005**
(21) Numéro de dépôt: 05300163.2
(22) Date de dépôt: 03.03.2005
(51) Int. Cl.: B05D 3/10, B05D 7/00

(54) **PROCEDE POUR L'OBTENTION D'UN SUBSTRAT METALLIQUE COMPORTANT UN REVETEMENT PROTECTEUR**

(30) Priorité: 03.03.2004 FR 0450437
(71) Demandeur: PPG INDUSTRIES FRANCE, 59770 Marly (FR)
(72) Inventeur: TARLOWSKI, Marc, 59990, PRESEAU (FR); MATTON, Stéphane, 59195, HERIN (FR); SPEHAR, Jean-Marc, 59582, LAMBRES LES DOUAI (FR); LABOUCHE, Didier, 59230, SAINT AMAND LES EAUX (FR)
(74) Mandataire: Michelet, Alain

(57) **Abrégé**

La présente invention concerne un procédé pour l'obtention de substrats métalliques comportant un revêtement protecteur, en particulier des substrats à base de fer tel que l'acier, l'acier galvanisé ou l'acier électrozingué, généralement utilisés dans les domaines du bâtiment et de l'industrie automobile.

## Description

La présente invention concerne de manière générale le domaine des revêtements de protection pour substrats métalliques, et notamment des substrats à base de fer tel que l'acier, l'acier galvanisé ou l'acier électrozingué, généralement utilisés dans les domaines du bâtiment et de l'industrie automobile.

La présente invention a plus particulièrement pour objet un procédé pour l'obtention d'un substrat métallique comportant un revêtement protecteur, comprenant l'activation de la surface des substrats métalliques, suivie du dépôt sur le substrat d'une composition aqueuse de primaire pour former un film de primaire, et de la réticulation de ce film.

Il est connu de l'homme du métier de protéger les tôles en acier galvanisé ou en acier électrozingué par des revêtements classiques, en utilisant des procédés comprenant une étape préalable de préparation de surface par passivation chromique, suivie de l'application d'une couche de peinture primaire (par exemple du type époxydique, polyester mélaminé, ou polyuréthane) en phase solvants organiques ou en phase aqueuse, et enfin de l'application d'un revêtement de finition (par exemple du type polyester mélaminé ou polyuréthane).

Toutefois, les revêtements obtenus par un tel procédé présentent l'inconvénient majeur à l'heure actuelle de mettre en oeuvre un métal lourd tel que le chrome ou des dérivés du chrome, qui sont toxiques et nuisibles pour l'environnement.

En outre, la peinture primaire mise en oeuvre dans ces procédés est généralement soumise à un traitement thermique à une température égale ou supérieure à 150°C, qui engendre la formation de vapeurs de solvants, ce qui constitue un inconvénient additionnel de tels procédés.

On a déjà proposé un procédé de dépôt d'un revêtement protecteur sur des aciers métalliques tels que l'acier électrozingué et l'acier galvanisé, dans lequel la réticulation est réalisée à des températures relatives basses. Ainsi, la demande internationale WO 01/85853 décrit un procédé de revêtement de feuilles de métal, et en particulier de feuilles d'acier galvanisé, comprenant le dépôt d'une composition à base de résine émulsifiée dans de l'eau, et la réticulation de cette composition au moyen d'un rayonnement UV, pour former un revêtement anti-corrosion. La composition à base de résine émulsifiée est exempte de monomère, ce qui permet de conférer de bonnes propriétés d'adhérence au revêtement. Toutefois, un tel procédé présente l'inconvénient de nécessiter un traitement de surface par passivation chromique, avant le dépôt de la composition à base de résine émulsifiée, afin de garantir une bonne tenue à la corrosion.

Par conséquent, il subsiste donc aujourd'hui, dans l'état de la technique, un fort besoin disposer d'un procédé permettant l'obtention de revêtements protecteurs pour substrats métalliques qui ne contiennent ni chrome (ou ses dérivés), ni solvants, et donc sans risque pour le consommateur, et qui présentent de bonnes propriétés d'adhérence et de résistance à la corrosion.

La présente invention vise justement à la satisfaction d'un tel besoin.

Or, la demanderesse a découvert de manière surprenante que, pour obtenir un revêtement protecteur sur des substrats métalliques tels que l'acier galvanisé ou l'acier électrozingué, présentant à la fois des propriétés intéressantes en terme de résistance à la corrosion et d'adhérence aux substrats, il fallait un traitement d'attaque chimique du substrat préalable au dépôt de la composition aqueuse de primaire, qui permette l'accrochage de la composition de primaire à la surface du substrat.

Plus particulièrement, la demanderesse a trouvé que l'utilisation d'une composition d'activation à base d'un fluoroacide métallique, tel que par exemple l'acide fluorozirconique, pour réaliser cette étape d'activation de la surface du substrat métallique, permettait d'obtenir les propriétés précitées.

L'utilisation d'acide fluorozirconique dans des procédés pour l'obtention de revêtements protecteurs pour substrats métalliques, et plus particulièrement de substrats en acier galvanisé, est connue de l'homme du métier.

Ainsi, la demande internationale WO 02/24344 décrit un procédé de revêtement de bandes métalliques, pour une utilisation dans l'industrie automobile, l'aviation et l'industrie aérospatiale. Dans l'un des modes de réalisation de l'invention objet de WO 02/24344, le procédé comprend le dépôt d'un revêtement anti-corrosion ou d'une peinture à base de polymère sur les bandes métalliques, la découpe de ces bandes métalliques ainsi revêtues, puis l'application d'une peinture ou d'une composition de type peinture. Cette dernière étape est réalisée par dépôt d'une composition sous forme de dispersion aqueuse à base d'une résine photopolymérisable soluble et/ou dispersable dans l'eau, d'une cire, d'au moins un photoinitiateur et d'au moins un agent anti-corrosion, suivie de la réticulation de la composition déposée et séchée. La composition aqueuse à base de résine photopolymérisable peut également comprendre des composés fluorés, et notamment des complexes fluorés, comme par exemple l'acide fluorozirconique. Toutefois, dans le procédé de revêtement de WO 02/24344, l'acide fluorozirconique et la résine photopolymérisable sont présent ensemble dans la composition aqueuse. Or, cette composition aqueuse a un pH basique. Etant donné que l'acide fluorozirconique doit être en milieu acide pour être efficace (en particulier dans une gamme de pH variant de 2 à 4), l'acide fluorozirconique ne peut donc pas permettre l'activation du substrat sur laquelle la composition aqueuse est déposée.

La présente invention a donc pour objet un procédé pour l'obtention d'un substrat métallique comportant un revêtement protecteur, ledit substrat étant à base de fer tel que l'acier, l'acier galvanisé ou l'acier électrozingué, ou à base d'aluminium ou de ses alliages, ledit procédé comportant les étapes suivantes :
(a) dégraissage du substrat à l'aide d'une solution alcaline, cette étape étant facultative lorsque le traitement est effectué directement sur une ligne de galvanisation ou d'électrozinguage en continu;
(b) rinçage à l'eau, de préférence déminéralisée ;
(c) activation du substrat métallique à l'aide d'une composition d'activation à base d'au moins un fluoroacide métallique ;
(d) séchage du substrat métallique ;
(e) application d'une composition aqueuse de primaire susceptible d'être polymérisée par irradiation au moyen d'un rayonnement UV ou par bombardement électronique, pour former un film sec de primaire d'au moins 1 µm d'épaisseur, ladite composition de primaire comprenant :
   un liant polymérique comportant :
      - 40 à 85 % en poids par rapport au poids total de ladite composition de primaire d'au moins une résine polymère insaturée contenant au moins un groupement acrylate et susceptible d'être polymérisée par irradiation au moyen d'un rayonnement UV ou par bombardement électronique ;
      - 5 à 50 % en poids par rapport au poids total de ladite composition de primaire d'au moins une résine polymère saturée ne contenant pas de groupement acrylate ; et
      - dans le cas où la polymérisation est réalisée par irradiation au moyen d'une irradiation UV, 1 à 10 % en poids par rapport au poids de ladite composition de primaire d'au moins un photoinitiateur ;
   une pâte pigmentaire comportant :
      - un liant de broyage ;
      - 1 à 20 % en poids par rapport au poids total de ladite composition de primaire d'au moins un pigment inhibiteur de corrosion ; et
      - de manière facultative, au moins une charge ; et
   de l'eau, de préférence, déminéralisée, comme milieu de dispersion de ladite composition de primaire ;
(f) traitement thermique pour éliminer l'eau résiduelle dans le film humide de primaire, pour obtenir un film sec de primaire ; et
(g) réticulation du film sec de primaire pour obtenir un revêtement protecteur réticulé ayant une épaisseur sèche d'au moins 1 µm, et de préférence de 3 à 5 µm.

Selon le procédé de la présente invention, le substrat métallique est soumis dans une première étape à un dégraissage à l'aide d'une solution alcaline, pour débarrasser la surface du substrat de toute trace de pollution et éliminer les oxydes éventuellement présents. Toutefois cette étape est facultative lorsque le substrat métallique est un substrat en acier galvanisé issu directement des lignes de galvanisation en continu ou d'électrozinguage en continu.

Par substrat en acier galvanisé issu directement des lignes de galvanisation en continu, on entend, au sens de la présente demande les substrats en acier galvanisé en sortie de ligne de galvanisation, qui n'ont été ni lissés (« skin-passés »), ni huilés. Cependant, même si l'étape de dégraissage n'est pas nécessaire pour de tels substrats, elle est toutefois souhaitable.

De préférence, la solution alcaline utilisée pour le dégraissage du substrat métallique a un pH égal ou supérieur à 12, de préférence de l'ordre de 13. En effet, lorsque le pH est au moins égal à 12, les substrats en acier galvanisés sont attaqués et les oxydes présents à la surface de ces substrats sont dissous.

A titre de solution alcaline utilisable selon la présente invention, on peut notamment citer les solutions à base d'hydroxyde de potassium ou d'hydroxyde de sodium.

L'étape de dégraissage (a) est généralement réalisée par immersion du substrat métallique dans un bain de solution alcaline. La température du bain est le plus souvent comprise dans une gamme de température allant de 55 à 60°C. La durée d'immersion varie généralement de 3 à 5 minutes, mais elle est évidemment d'autant plus courte que la température de solution alcaline du bain est élevée. La durée d'immersion est par exemple de l'ordre de 10s lorsque la température du bain est de 70°C. L'étape de dégraissage a) peut également être effectuée par tout autre moyen, comme par exemple l'aspersion.

A l'issue de l'étape de dégraissage a) le substrat métallique est rincé à l'eau, de préférence déminéralisée.

Selon une caractéristique essentielle du procédé de l'invention, le substrat dégraissé et rincé est ensuite soumis à une étape d'activation c) consistant en une attaque chimique par une composition à base d'au moins fluoroacide métallique, dite composition d'activation.

L'attaque chimique est opérée par le fluoroacide métallique qui constitue le réactif d'attaque réagissant sur le substrat en se fixant sur lui et en apportant des groupes hydroxydes, à partir desquels la formation du revêtement protecteur par polymérisation peut commencer. Cette attaque chimique par le fluoroacide constitue une initiation de la polymérisation à la surface du substrat métallique, qui permet d'améliorer les performances d'accrochage du revêtement protecteur.

A titre de fluoroacide métallique utilisable selon la présente invention, on peut citer l'acide fluorozirconique, l'acide fluorotitanique et l'acide fluorosilicilique.

Toutefois, les meilleurs résultats ont été obtenus avec des compositions d'activation à base d'acide fluorozirconique, capable d'initier des groupes hydroxydes et d'apporter des ions zirconates qui se fixent sur le substrat.

La teneur de l'acide fluorozirconique dans la composition d'activation peut varier de 0,1 g/l à 20 g/l par rapport au poids total de la composition d'activation (soit 50 à 10 000 ppm de zirconium).

Selon l'invention, on a également trouvé qu'il était hautement préférable d'utiliser en combinaison l'acide fluorozirconique et au moins une résine à structure époxydique.

A titre d'exemples de résines à structure époxydique utilisables dans la composition d'activation de l'invention, en association avec le (ou les) fluoroacide(s) métallique(s), on peut citer les résines dérivées de polyépoxydes, de préférence de polyépoxydes possédant une équivalence en 1,2 -époxy supérieure à 1, de préférence d'environ 2. Autrement dit, le nombre moyen de groupes 1, 2-époxy par molécule doit être supérieur à 1, de préférence d'environ 2.

Les polyépoxydes peuvent être des époxydes bien connus. Des exemples de ces polyépoxydes ont été décrits par exemple dans les brevets US 2,467,171 ; US 2,615,007 ; US 2,716,123 ; US 3,030,336 ; US 3,053,855 ; et US 3,075,999.

Les polyépoxydes préférés sont les éthers polyglycidyliques de polyols cycliques, et en particulier les éthers polyglycidyliques de polyphénols comme le bisphénol A.

Conviennent également les éthers polyglycidyliques de polyalcools similaires dérivés de polyalcools cycliques tels que le 1,2-cyclohexanediol, le 1,4-cyclohexanediol, le 1,2-bis(hydroxyméthyl)cyclohexane, le 1,3-bis(hydroxyméthyl)cyclohexane, et le bisphénol A hydrogéné.

L'étape c) d'activation du substrat métallique à l'aide de la composition d'activation précédemment décrite, est réalisé dans de bonnes conditions par immersion du substrat dans un bain à une température par exemple, de l'ordre de 60°C, mais également à une température supérieure (80°C) ou à la température ambiante. Le paramètre de température n'influe que sur la cinétique de réalisation de l'activation de la surface du substrat. Enfin, l'étape c) d'activation peut également être mise en oeuvre par aspersion de la composition d'activation sur le substrat métallique, ou par tout autre moyen.

Après l'étape d'activation chimique c), le substrat est ensuite soumis à un séchage d) qui peut s'effectuer par tout moyen conventionnel.

Puis, selon une autre caractéristique essentielle du procédé de l'invention, on applique sur le substrat métallique (étape e) du procédé de l'invention) une composition aqueuse de primaire susceptible d'être polymérisée par irradiation au moyen d'un rayonnement UV ou par bombardement électronique, pour former un film sec de primaire d'au moins 1 µm d'épaisseur. La composition aqueuse de primaire comprend un liant polymérique, une pâte pigmentaire, et de l'eau, de préférence déminéralisée, comme milieu de dispersion de la composition de primaire. Chaque constituant de la composition de primaire sera plus amplement décrit ci-après.

### Liant polymérique

Le liant polymérique de la composition de primaire de l'invention comprend :
- 40 à 85 % en poids par rapport au poids total de ladite composition de primaire d'au moins une résine polymère insaturée contenant au moins un groupement acrylate, et susceptible d'être polymérisée par irradiation au moyen d'un rayonnement UV (photopolymérisation) ou par bombardement d'électrons sous forme d'un faisceau,
- 5 à 50 % en poids par rapport au poids total de ladite composition de primaire d'au moins une résine polymère saturée ne contenant pas de groupement acrylate, et
- dans le cas où la polymérisation est réalisée par irradiation au moyen d'un rayonnement UV, 1 à 10 % en poids par rapport au poids total de ladite composition de primaire d'au moins un photoinitiateur.

La présence, dans la composition de primaire, du polymère contenant au moins un groupement acrylate est essentielle, car c'est le groupement acrylate qui permet d'obtenir, par photopolymérisation ou par polymérisation par bombardement électronique, une couche de revêtement protecteur polymérisée (réticulée).

A titre d'exemples de résines polymères insaturées contenant au moins un groupement acrylate utilisables selon la présente invention, on peut citer les résines époxy-acrylates, les uréthanes-acrylates, les polyesters-acrylates, les polyesters uréthanes-acrylates, les éthers acrylates, les amines acrylates et leurs mélanges.

De préférence, la résine polymère contenant au moins un groupement acrylate est une résine uréthane-acrylate.

La présence, dans la composition de primaire, d'au moins une résine polymère ne contenant pas de groupement acrylate, n'intervient pas lors de la réticulation du film de primaire, mais permet d'améliorer les performances en terme de propriétés d'adhésion sur le substrat, et de flexibilité du film de primaire.

A titre de résines polymères saturées ne contenant pas de groupement acrylate, utilisables selon la présente invention, on peut citer les dispersions ou les émulsions de résines acryliques, acryliques-styrénées, acryliques-uréthanes, ou encore polyesters.

Le liant polymérique de la composition de primaire de l'invention peut également comprendre des photoinitiateurs, dont la présence est indispensable si la réticulation de l'étape g) de la composition primaire est réalisée par irradiation au moyen d'un rayonnement UV.

A titre de photoinitiateurs utilisables dans la composition de primaire de l'invention, on peut notamment citer les benzylcétones, les dialkyl acétophénones, les alpha hydroxy alkylphénones, et en particulier l'α-diméthoxy-α-hydroxy acétophénone, commercialisé par CIBA GEIGY sous la dénomination commerciale Darocur 1173 ®, les oxydes d'acylphosphines et la benzophénone.

### Pâte pigmentaire

La pâte pigmentaire de la composition de primaire de l'invention comporte :
un liant de broyage,
1 à 20 % en poids par rapport au poids total de ladite composition de primaire d'au moins un pigment inhibiteur de corrosion, et
de manière facultative, d'au moins une charge.

La pâte pigmentaire de la composition de primaire de l'invention est généralement obtenue par broyage ou dispersion du (ou des) pigment(s) inhibiteur(s) de corrosion, et de manière facultative de la (ou des) charge(s), dans le liant de broyage selon une méthode bien connue de l'homme de l'art.

Par liant de broyage, on entend, au sens de la présente invention, un véhicule pour les pigments qui agit comme un agent de dispersion formant une pâte.

A titre de liants de broyage utilisables dans la composition de primaire de l'invention, on peut citer les liants de broyage constitués d'une résine dérivée d'une résine époxy et contenant des groupes sulfonium ternaires et des groupes alkylphénoxydes, tels que par exemple les liants de broyage décrits dans le brevet US 4,715,898.

A titre de liants de broyage utilisables dans la composition de primaire de l'invention, on peut également citer les liants de broyage constitués d'une résine dérivée d'une résine époxy, et contenant des groupes sulfonium ternaires et des groupes ammonium quaternaires, tels que ceux décrits dans le brevet EP 0336599 B1.

Toutefois, on utilisera de préférence, à titre de liant de broyage de la composition de primaire, la résine polymère exempte des groupements acrylates du liant polymérique de la composition de primaire.

Par pigment inhibiteur, on entend, au sens de la présente demande, un pigment qui permet d'améliorer la protection contre la corrosion électrochimique du substrat métallique.

A titre de pigments inhibiteurs de corrosion utilisables selon l'invention, on peut notamment citer les chromates, les phosphates, notamment d'aluminium ou de zinc, les borates, les molybdates et les silicates de calcium.

Outre le pigment inhibiteur de corrosion, la pâte pigmentaire de la composition de primaire de l'invention peut également comprendre un ou plusieurs inhibiteurs de corrosion sous forme liquide.

A titre d'inhibiteurs de corrosion sous forme liquide utilisables selon l'invention, on peut notamment citer les solutions aqueuses d'acide 1-(benzothiazol-2-ylthio)succinique et les solutions aqueuses d'éthylène méthacrylate phosphate.

Généralement, la composition de primaire de l'invention présente une concentration pigmentaire en volume CPV des pigments inhibiteurs de corrosion pouvant varier de 0,1 à 0,25, et de préférence de 0,1 à 0,15.

Par concentration pigmentaire en volume CPV des pigments inhibiteurs, on entend, au sens de la présente invention, le rapport du volume des pigments inhibiteurs au volume sec de la composition de primaire, le volume sec de la composition de primaire comprenant le volume du liant polymérique et le volume de l'ensemble des pigments et des charges.

### Constituants facultatifs

Outre, le liant polymérique, la pâte pigmentaire et l'eau, la composition de primaire de l'invention peut également comprendre des constituants facultatifs, tels que des agents anti-mousse, des agents mouillants, des agents tensioactifs, des agents épaississants et/ou anti-sédimentation, et/ou leurs mélanges.

De manière avantageuse, la composition de primaire peut également comprendre 1 à 5% en poids par rapport au poids total de la composition de primaire d'un ou plusieurs monomères ou oligomères hydrosolubles ou hydro diluables à titre de co-solvant, pour retarder le séchage du film de primaire pendant l'application.

La quantité de composition primaire à utiliser est en général choisie de manière à former sur le substrat des films secs de primaire d'au moins 1 µm d'épaisseur.

Avant l'étape de réticulation du film de primaire proprement dite, le substrat métallique recouvert du film humide de primaire est séché lors de l'étape f) du procédé de l'invention, à une température située dans une gamme allant de 10 à 120°C environ, selon la nature exacte de la composition de primaire. Cette opération de séchage permet d'accélérer l'élimination de l'eau résiduelle présente dans le film de primaire à la surface du film de primaire. Cette opération de séchage peut être réalisée dans de bonnes conditions dans une étuve à une température égale ou supérieure à 110°C, pendant une durée de l'ordre de la minute. Mais, il peut également être plus avantageux d'utiliser de l'air chaud pulsé ou un rayonnement infrarouge adapté à la composition du primaire dans ce cas, la durée du traitement thermique est de l'ordre de quelques secondes, et la température est égale ou supérieure à 80°C. A l'issue du séchage f), on obtient un film sec de primaire.

Après le séchage f), le substrat métallique est soumis à une étape de réticulation g) du film sec de primaire, conduisant à la formation d'un revêtement protecteur réticulé ayant une épaisseur sèche d'au moins 1 µm, et de préférence de l'ordre de 3 à 5 de la composition de primaire de l'invention µm.

La réticulation g) du film sec de primaire est réalisée par irradiation au moyen d'un rayonnement UV ou par bombardement électronique.

La polymérisation du revêtement soumis au rayonnement UV est meilleure si la température de la plaque revêtue est d'au moins 60 °C juste avant l'étape d'irradiation UV.

Dans le cas d'une réticulation par irradiation au moyen d'un rayonnement UV, on peut utiliser de préférence une lampe UV sous azote avec un taux d'oxygène inférieur à 200 ppm.

Le procédé de l'invention peut également comprendre, postérieurement à l'étape de réticulation g) du film sec de primaire, une étape de finition h), comprenant :
- l'application d'une composition de finition sur le revêtement protecteur réticulé, suivie de
- la réticulation de ladite composition de finition pour obtenir un revêtement de finition.

Ce traitement peut être une finition de type « coil coating » comprenant les étapes suivantes :
l'application d'une composition de finition à base de polyester-mélanine, ou à base de polyester-uréthane, ou de polyvinyldifluoré, suivie de
la réticulation de ladite composition de finition par chauffage dans un four thermique ou électrique à une température située dans la gamme variant de 240° à 250°C, pour obtenir un revêtement de finition réticulé.

Ce traitement de finition peut également être une finition « à froid » comprenant les étapes suivantes :
l'application d'une composition de finition à base d'uréthane-acrylate aliphatique, suivie de
la réticulation de ladite composition de finition par bombardement électronique, pour obtenir un revêtement de finition réticulé.

L'invention sera illustrée, sans être aucunement limitée, par les exemples détaillés qui suivent, en référence aux dessins annexés sur lesquels :

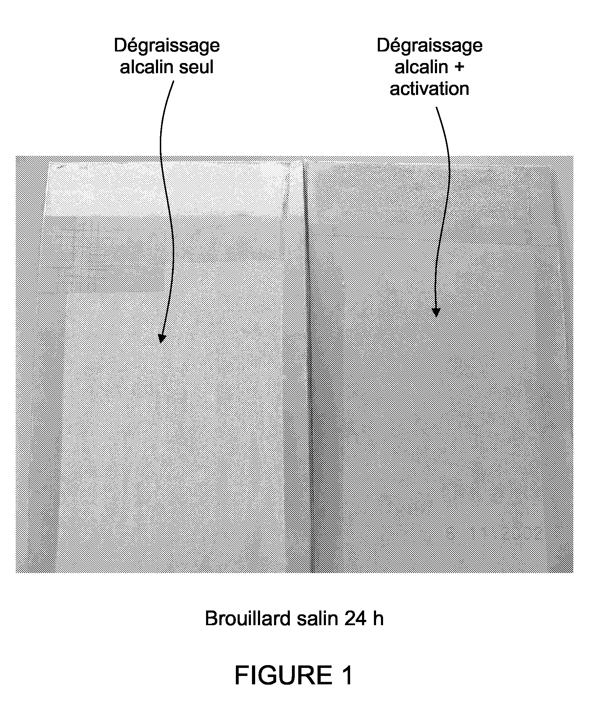

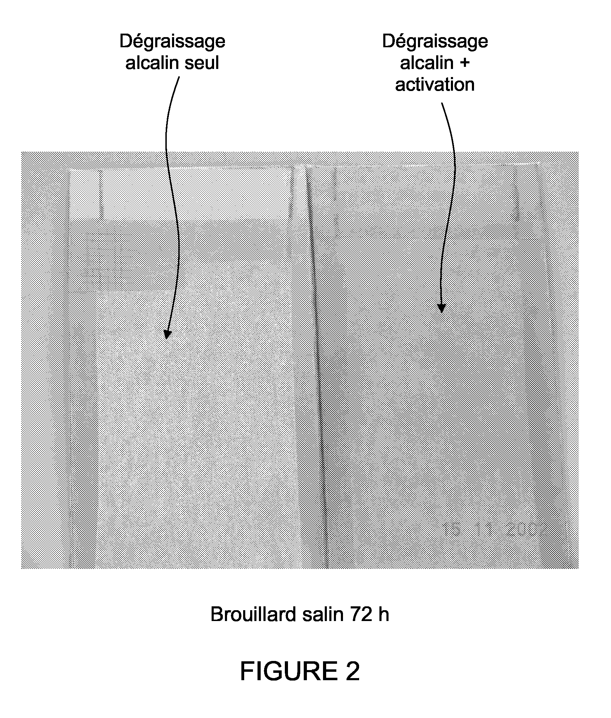

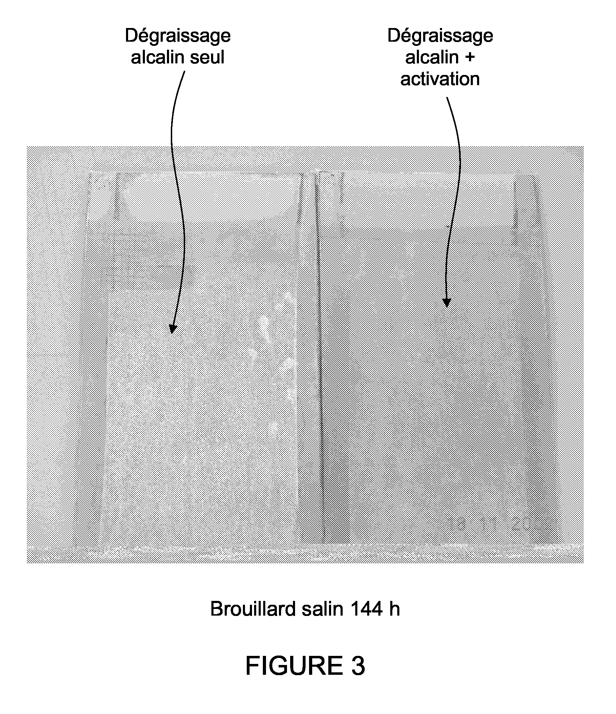

- Les figures 1 à 3 sont des photographies illustrant la comparaison des performances anti-corrosion lors du test du brouillard salin, à différents stades de l'exposition au brouillard salin (après respectivement 14 heures, 72 heures et 144 heures d'exposition), de plaques en acier galvanisé revêtues obtenues par le procédé de l'invention (exemple 1), avec les performances de plaques en acier galvanisé revêtues obtenues par un procédé identique au procédé de l'invention hormis l'étape d'activation qui a été supprimée (exemple C1).

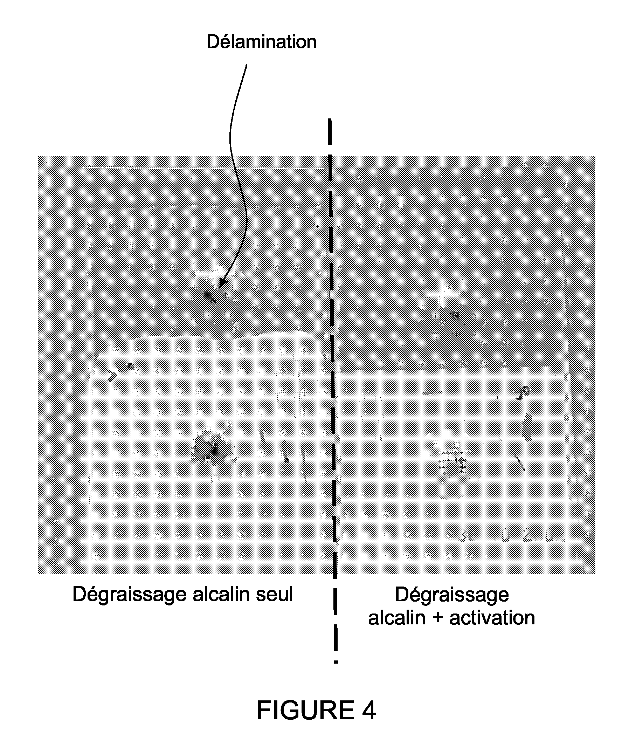

- La figure 4 est une photographie illustrant la comparaison des performances au test « ERICHSEN » de déformation des plaques en acier galvanisé revêtues obtenues par le procédé de l'invention (exemple 1), avec les performances de plaques revêtues en acier galvanisé obtenues par un procédé identique au procédé de l'invention mais dont l'étape d'activation a été supprimée (exemple C1).

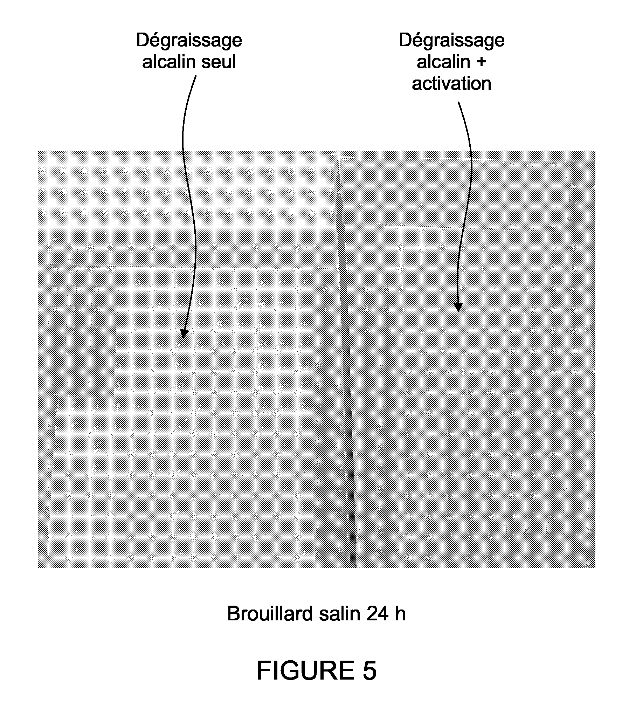

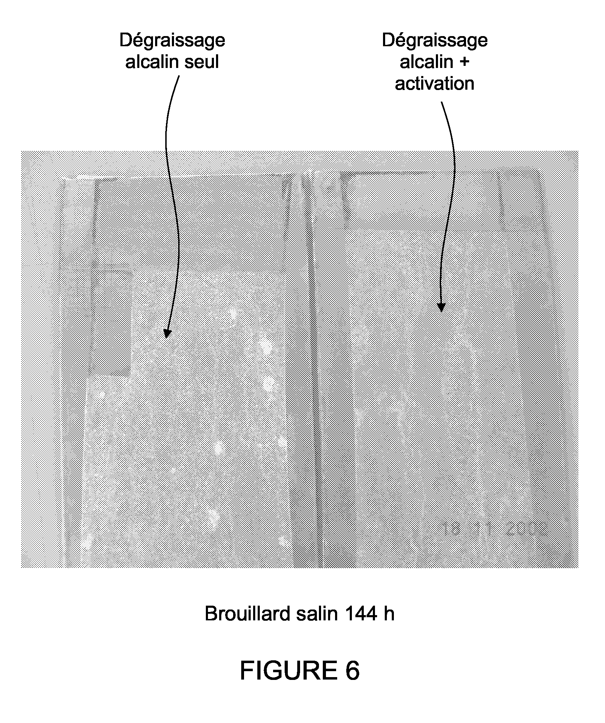

- Les figures 5 et 6 sont également des photographies illustrant la comparaison des performances anti-corrosion lors du test du brouillard salin, à différents stades de l'exposition au brouillard salin (après respectivement 24 heures et 144 heures d'exposition), de plaques en acier galvanisé revêtues obtenues par le procédé de l'invention (exemple 2), avec les performances de plaques en acier galvanisé revêtues obtenues par un procédé identique au procédé de l'invention mais dont l'étape d'activation a été supprimée (exemple C2).

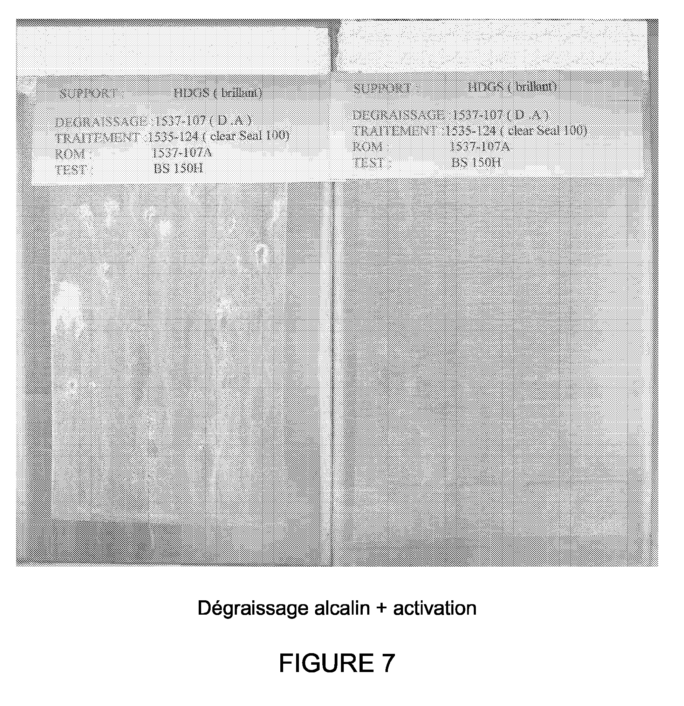

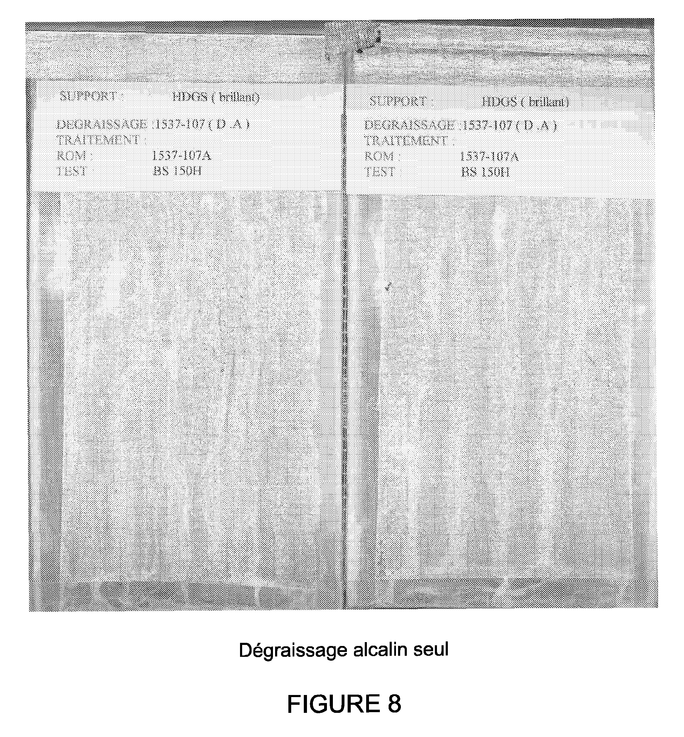

- Les figures 7 et 8 sont aussi des photographies illustrant la comparaison des performances anti-corrosion lors du test du brouillard salin, après 150 heures d'exposition au brouillard salin, de plaques en acier galvanisé revêtues obtenues par le procédé de l'invention (exemple 3), avec les performances de plaques en acier galvanisé revêtues obtenues par un procédé identique au procédé de l'invention mais dont l'étape d'activation a été supprimée (exemple C3).

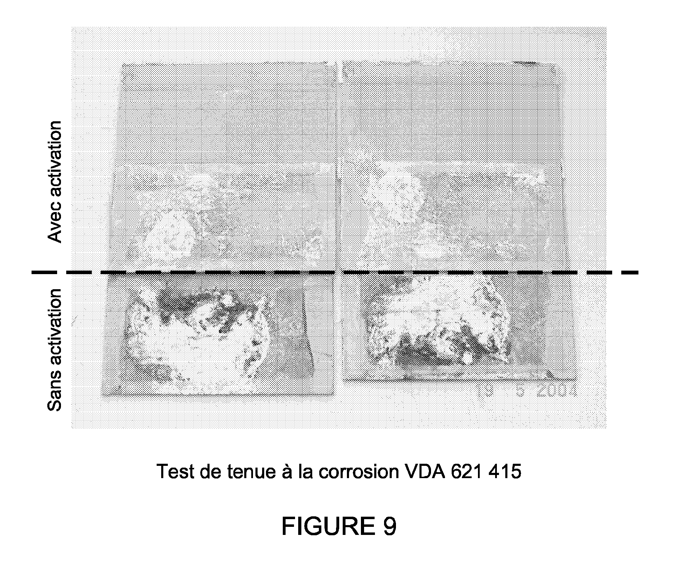

- La figure 9 une photographie illustrant la comparaison des performances anti-corrosion lors du test de tenue à la corrosion automobile VDA 621 415, après 10 cycles, de plaques en acier électrozingué revêtues obtenues par le procédé de l'invention (exemple 5), avec les performances de plaques en acier electrozingué revêtues obtenues par un procédé identique au procédé de l'invention mais dont l'étape d'activation a été supprimée (exemple C5).

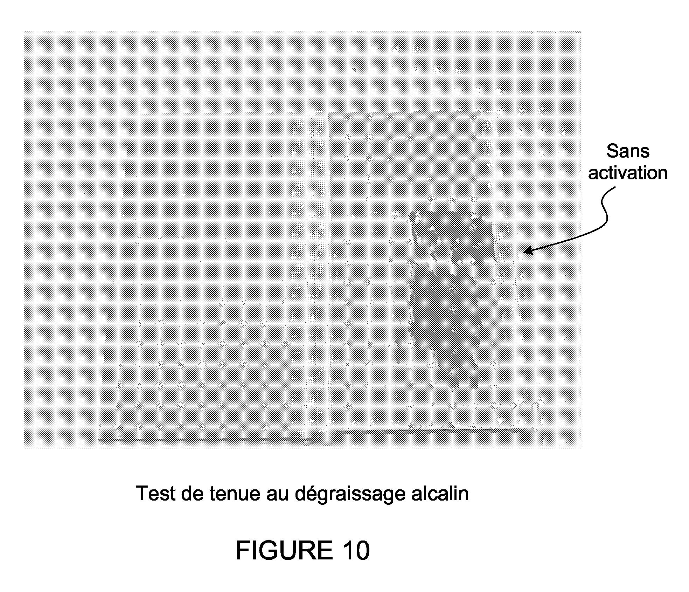

- La figure 10 une photographie illustrant la comparaison des performances de tenue au dégraissage alcalin automobile de plaques en acier électrozingué revêtues obtenues par le procédé de l'invention (exemple 5), avec les performances de plaques en acier electrozingué revêtues obtenues par un procédé identique au procédé de l'invention mais dont l'étape d'activation a été supprimée. Ce test consiste à immerger durant 4mn à 50°C les plaques dans un bain de dégraissage de Ridoline 1550 de pH13 suivi d'un rinçage à l'eau déminéralisée froide.

Le test du brouillard salin et le test ERICHSEN de déformation sont décrits ci-après dans les exemples.

Dans les exemples, sauf spécification contraire, toutes les quantités sont exprimées en parties en poids pour 100 parties en poids de granulats.

### 1. Matières premières

### Substrat métallipue :

plaques en acier galvanisé prélevé sur ligne de galvanisation (ligne ARCELOR galvameuse) ;
plaques en acier électrozingué non traité

### Solution alcaline pour le dégraissage alcalin:

- solution à base d'hydroxyde de potassium et d'antimousse commercialisée par Chemetall sous la dénomination commerciale Parco 305E®.

### Compositions d'activation à base d'acide fluorozirconique

- Composition AFZ1 : solution aqueuse à 0,2 g/l d'acide fluorozironique à 50% (pH de 4,5)
- Composition AFZ2 : solution aqueuse à 2g/l d'acide fluorozironique à 50% (pH de 2,21).
- Composition AFZ3 : solution aqueuse comprenant :
   7,1 % d'acide fluorozironique à 50%,
   19% en poids d'une résine dérivée de résine époxy, constituée de 4 équivalents époxy du type époxy 880, neutralisés par 4 équivalents amine de la di-éthanol amine,
   2,9% d'acide nitrique (pH de 2,97), et
   70 % d'eau déminéralisée,
      les pourcentages indiqués étant des pourcentages en poids par rapport au poids total de la composition AFZ3

La composition AFZ3 est une solution aqueuse commercialisée par la société Chemseal sous la dénomination commerciale, Chemseal 100®.

### Compositions aqueuses de primaire

### Constituants :

résines uréthanes-acrylates aliphatiques dispersées en phase aqueuse :
   résine commercialisée par UCB sous la dénomination commerciale Ucecoat DW 7770®, et
   résine commercialisée par Synthopol Chemie sous la dénomination commerciale Syntholuc DRB 1577®.
résines acryliques dispersées en phase aqueuse :
   résine commercialisée par UCB sous la dénomination commerciale Duroxyn Vax®, et
   résine commercialisée par Clariant sous la dénomination commerciale Mowilith LDM 7170®.
photoinitiateur :
   alpha alpha diméthoxy alpha hydroxy acétophénone commercialisé par Ciba Geigy sous la dénomination commerciale Darocur 1173®.

Pigments inhibiteurs :
silicate de calcium commercialisé par GRACE Division sous la dénomination commerciale Shieldex C303®,
triphosphate d'aluminium commercialisé par Safic Alcan sous la dénomination commerciale Kwhite KTC 720®kk,
selc de zinc d'acide organique commercialisé par Cognis sous la dénomination commerciale Alcophor 827®.

Agent tensioactif fluoré :
solution d'un polyéther modifié de polysiloxane commercialisé par Byk Chemie sous la dénomination commerciale Byk 346®.

Agent épaississant :
épaississant polyuréthane commercialisé par Schwegmann sous la dénomination commerciale Schwego pur 8050®.

Agent antimousse :
mélange de polysiloxane et de particules hydrophobes commercialisé par Byk Chemie sous la dénomination commerciale BYK 028®.

Composition de finition :
résine polyester hydroxylée (en milieu solvants organiques).

### Composition de primaire 1

| Nature chimique | Quantité (parties en poids) |
|---|---|
| Ucecoat DW 7770® | 80 |
| Duroxyn Vax® | 20 |
| Shieldex C303® | 10 |
| Kwhite KTC720® | 5 |
| Alcophor 827® | 0,5 |
| Byk346® | 0,2 |
| Schwego pur 8050® | 0,3 |
| Irgacure 500® | 1 |

### Composition de primaire 2 :

| Nature chimique | Quantité (parties en poids) |
|---|---|
| Ucecoat DW7 7770® | 80 |
| Duroxyn Vax® | 20 |
| Shieldex C303® | 10 |
| Kwhite KTC 720® | 5 |
| Alcophor 827® | 0.5 |
| Byk 346® | 0.2 |
| Schwego pur 8050® | 0.3 |
| Darocure 1173® | 1 |

### 2. Méthodes de mesure

### Test du brouillard salin

Les performances anti-corrosion des échantillons sont déterminées à l'aide du test du brouillard salin. Après dépôt du revêtement protecteur, les plaques d'acier revêtues sont soumises au test du brouillard salin réalisé selon la norme NF X 41-002. Ce test consiste à pulvériser sous forme de brouillard, une solution aqueuse à 5% en poids de NaCI maintenue à une température de 35°C. Les plaques sont examinées régulièrement à des stades différents (à 24 heures, 72 heures, 144 heures, et 150 heures) de l'exposition au brouillard salin. On apprécie visuellement la présence de sels de zinc formés selon l'échelle suivante :
- : pas de sels de zinc
+ : traces de sels de zinc
++ : formation de sels de zinc (non négligeable)
+++ : formation abondante de sels de zinc

### Test de résistance aux solvants

On évalue, après application du revêtement de primaire, ainsi qu'après application du revêtement de finition, la résistance des plaques revêtues à un solvant tel que la méthyléthylcétone.

Pour cela, on procède de la manière suivante :
- on imbibe un coton de méthyléthylcétone,
- le coton imbibé est ensuite appliqué à la surface de la plaque par un mouvement de va-et-vient, et
- on détermine le nombre de mouvements de va-et-vient (ou passages) effectués jusqu'à apparition d'une détrempe et d'un décollage du revêtement protecteur de la plaque.

Plus le nombre de passages est élevé, plus le degré de protection du substrat dû au revêtement est élevé .

### Test d'adhérence

On détermine le degré d'adhérence du revêtement protecteu à la surface du substrat métallique de la manière suivante selon la norme ISO 2409 :
- on fait des incisions formant un quadrillage à la surface du revêtement protecteur (10x10 sur une surface de 1,5 cm²), puis
- on fixe sur la surface incisée un ruban adhésif de largeur au moins égale à la surface quadrillée, portant la référence 595TR1966 fourni par la société 3M,
- lors du pelage du ruban adhésif, on observe visuellement la surface adhésive pour constater la présence ou l'absence d'écailles de revêtement.

### Test ERICHSEN

Ce test consiste en une déformation à 90 % du point de rupture du substrat revêtu. Cette déformation est faite sur l'envers du substrat revêtu.

### EXEMPLE 1

Trois plaques en acier galvanisé sont dégraissées par immersion pendant 5 à 10 secondes dans un bain comprenant 3,75% en poids de Chemetall Parco 305E® par rapport au poids total du bain. Le pH du bain est de 13 à 14 et la température est de 50°C à 60°C.

Les plaques sont ensuite rincées à l'eau déminéralisée froide, puis séchées en étuve à 125°C pendant 4 minutes.

Les plaques dégraissées, rincées et séchées sont ensuite soumises à un traitement d'activation par immersion dans un bain de composition AFZ1 pendant une minute. Puis, les plaques sont séchées en étuve pendant 5 minutes à 125°C.

On applique ensuite, dans les cinq minutes qui suivent le séchage, la composition de primaire 1, formant ainsi à la surface des plaques, un film humide de primaire d'épaisseur de l'ordre de 10-12µm.

Les plaques revêtues du film humide de primaire sont soumises à un traitement thermique ("flash off) de 2 minutes à 125°C, puis à une réticulation par irradiation au moyen d'un rayonnement UV. On obtient un revêtement réticulé ayant une épaisseur de l'ordre de 5-6 µm.

On réalise sur les plaques ainsi revêtues le test du brouillard salin, le test d'adhérence, le test de résistance au solvant, et le test "ERICHSEN".

Puis, les plaques revêtues sont soumises à un traitement de finition. Celui-ci consiste en l'application d'une composition finition de type polyester/mélamine, classiquement utilisée dans l'industrie du prélaquage. Cette composition de finition est appliquée au moyen d'une réglette de laboratoire, puis réticulée lors d'une cuisson à 240°C pendant 30s.

On réalise alors une nouvelle fois, après le traitement de finition, le test de résistance au solvant, le test d'adhérence , et le test « ERICHSEN ».

Les résultats obtenus à ces différents tests ont été rassemblés dans le tableau 1.

### EXEMPLE COMPARATIF C1

A titre comparatif par rapport à l'exemple 1, on applique sur des plaques en acier galvanisé le même revêtement protecteur que celui de l'exemple 1, en procédant de la même manière qu'à l'exemple 1, hormis l'étape d'immersion dans le bain de composition AFZ1 à base d'acide fluorozironique qui a été supprimée.

De la même manière qu'à l'exemple 1, on réalise sur les plaques ainsi revêtues, le test du brouillard salin (uniquement avant l'application du revêtement de finition), le test d'adhérence, le test de résistance au solvant, et le test « ERICHSEN ».

Les résultats obtenus à ces différents tests ont également été rassemblés dans le tableau 1.

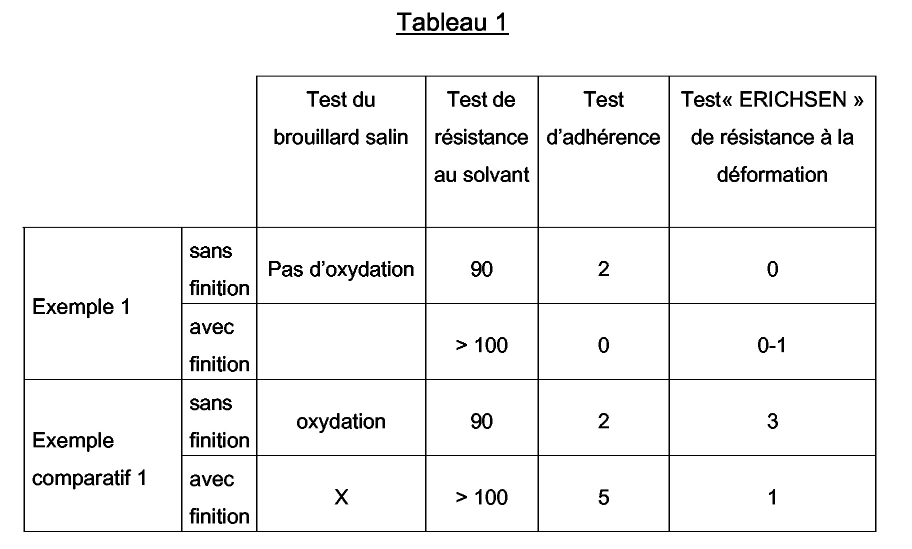

La comparaison des résultats au test du brouillard salin des exemples 1 et C1 montre la présence d'un début d'oxydation lorsque l'éprouvette n'a pas subi de traitement initial d'activation (exemple C1). Ceci est illustré par les figures 1 à 3, à différents stades de l'exposition au brouillard salin (respectivement à 24 heures, 72 heures et 144 heures). Ces figures montrent que les plaques de l'exemple comparatif 1 présentent des traces longitudinales blanches (appelées « saignements »), qui correspondent à la formation de chlorure de zinc et d'hydroxyde de zinc (rouille blanche), tandis que les plaques de l'exemple 1 n'en présentent pas. La résistance au brouillard salin est donc meilleure lorsque les plaques ont été soumises à un traitement d'activation à l'aide d'acide fluorozirconique, préalablement au dépôt de la composition de primaire.

Par ailleurs, l'adhérence et le comportement au test « ERICHSEN » de déformation sont significativement meilleurs avec un traitement initial d'activation. Dans ce cas (exemple 1), aucune délamination du revêtement n'est observée. Ceci est illustré par la figure 4. Les plaques de la figure 4 présentent chacune une partie inférieure et une partie supérieure : la partie inférieure comprend le film de primaire et le revêtement de finition, tandis que la partie supérieure ne comprend que le film de primaire. La figure 4 montre qu'à l'endroit de la déformation, il n'y a plus du tout de revêtement pour la plaque de l'exemple comparatif 1, que ce soit pour la partie supérieure (avec revêtement de finition), ou pour la partie inférieure de la plaque (sans revêtement de finition). Par contre, dans le cas de l'exemple 1, le revêtement subsiste (pour la partie inférieure et la partie supérieure avec revêtement de finition). Par conséquent, le traitement d'activation à l'aide d'acide fluorozirconique améliore l'adhérence du revêtement protecteur sur le substrat métallique.

### EXEMPLE 2

Des plaques en acier galvanisé sont dégraissées par immersion pendant 5 secondes dans un bain comprenant 3,75% en poids de Chemetall Parco 305E® par rapport au poids total du bain. Le pH du bain est de 13 à 14 et la température est de 50°C.

Les plaques sont ensuite rincées à l'eau déminéralisée froide, puis séchées à 125°C pendant 4 minutes.

Les plaques dégraissées, rincées et séchées, sont ensuite soumises à un traitement d'activation par immersion dans un bain de composition AFZ1 pendant 1 minute.

Les plaques sont ensuite séchées en étuve pendant cinq minutes à 125°C.

On applique ensuite, dans les cinq minutes qui suivent le séchage, la composition de primaire 2, formant ainsi à la surface de la plaque un film de primaire ayant une épaisseur de l'ordre de 10-12µm.

Les plaques ainsi revêtues du film de primaire sont ensuite soumises à un traitement thermique ("flash off") de 2 minutes à 125°C, puis à une réticulation par irradiation au moyen d'un rayonnement UV (un passage à 10 m/mn sous deux émetteurs de type RPC 80 W sous azote).

On réalise sur les plaques ainsi revêtues le test du brouillard salin, le test d'adhérence ("quadrillage"), le test de résistance au solvant (A/R MEK) et le test « ERICHSEN » de résistance à la déformation.

Puis, les plaques revêtues du film de primaire sont finalement soumises au même traitement de finition que celui de l'exemple 1.

On réalise ensuite une nouvelle fois le test de résistance au solvant, le test d'adhérence, et le test RXN « ERICHSEN » de résistance à la déformation.

Les résultats obtenus à ces différents tests sont présentés dans le tableau 2.

### EXEMPLE COMPARATIF 2

A titre comparatif par rapport à l'exemple 2, on applique sur des plaques en acier galvanisé le même revêtement protecteur que celui de l'exemple 2, en procédant de la même manière qu'à l'exemple 2, hormis l'étape d'immersion dans le bain de composition AFZ1 à base d'acide fluorozironique, qui a été supprimée.

Les résultats aux différents tests sont également présentés dans le tableau 2, comme pour l'exemple 2.

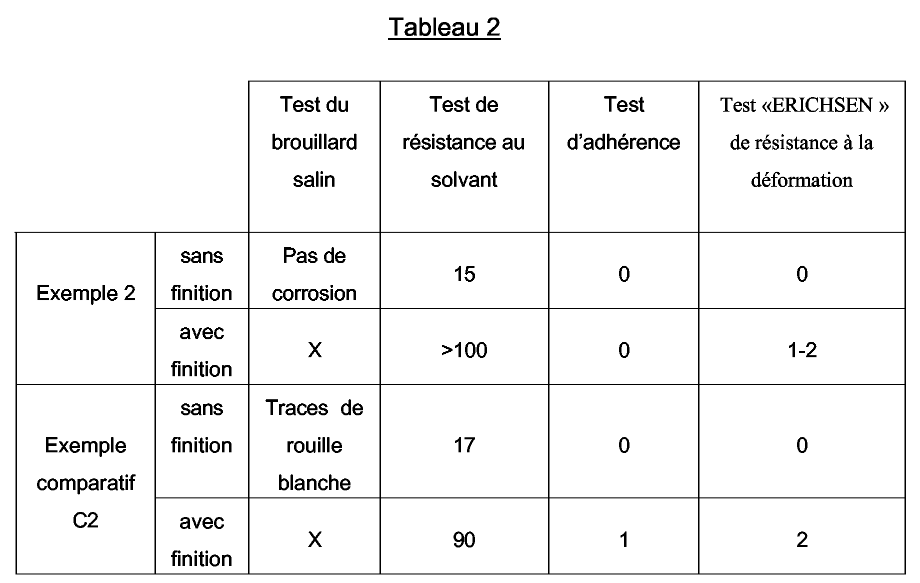

La comparaison des résultats au test en brouillard salin des exemples 2 et C2 est illustrée par les figures 5 et 6. Ces figures montrent que les plaques de l'exemple comparatif 2 présentent des traces longitudinales blanches (appelées « saignements ») après 140h de brouillard salin, tandis que les plaques de l'exemple 2 n'en présentent pas. La résistance au brouillard salin est donc meilleure lorsque les plaques ont été soumises à un traitement d'activation à l'aide d'acide fluorozirconique, préalablement au dépôt de la composition de primaire.

Par ailleurs, l'adhérence et la tenue à la déformation (test « ERICHSEN ») des plaques revêtues d'un revêtement de finition sont significativement meilleures lorsque le substrat a subi un traitement d'activation.

### EXEMPLE 3

Des plaques en acier galvanisé sont dégraissées par immersion pendant 5 secondes dans un bain comprenant 3,75% en poids de Chemetall Parco 305E® par rapport au poids total du bain. Le pH du bain est de 13 à 14 et la température est de 50°C.

Les plaques sont, de la même manière qu'aux exemples 1, 2, C1 et C2, rincées à l'eau froide déminéralisée, puis séchées à 125°C pendant 4 minutes.

Les plaques dégraissées, rincées et séchées, sont ensuite soumises à un traitement d'activation par immersion dans un bain de composition AFZ3 pendant 2 minutes.

Les plaques sont ensuite séchées en étuve ("flash off) pendant 2 minutes à 125°C.

Puis, on applique ensuite, dans les cinq minutes qui suivent le séchage, la composition de primaire 1, formant ainsi à la surface de la plaque un film humide de primaire ayant une épaisseur de l'ordre de 10-12µm. Puis les plaques revêtues de primaire sont ensuite soumises au même traitement de finition que pour l'exemple 1

La figure 7 montre l'état des plaques revêtues de l'exemple 3 après avoir été soumises pendant 150 heures au test du brouillard salin.

### EXEMPLE COMPARATIF 3

A titre comparatif, par rapport à l'exemple 3, on applique sur des plaques en acier galvanisé, le même revêtement protecteur que celui de l'exemple 3, en procédant de la même manière qu'à l'exemple 3, hormis l'étape d'immersion dans le bain de composition AFZ3 à base d'acide fluorozirconique d'acide nitrique et de résine cationique qui a été supprimée.

La figure 8 montre l'état des plaques revêtues de l'exemple 3 après avoir été soumises pendant 150 heures au test du brouillard salin.

La comparaison des figures 7 et 8 montre que les plaques de l'exemple 3 présentent très significativement moins de traces blanches (« saignements ») que celles de l'exemple comparatif 3, ce qui signifie que le traitement d'activation préalable confère une meilleure protection à la corrosion du film de primaire.

### EXEMPLE 4

Des plaques en acier électrozingué sont dégraissées par immersion pendant 5 secondes dans un bain comprenant 3,75% en poids de Chemetall Parco 305E® par rapport au poids total du bain. Le pH est, comme pour les exemples précédents, de 13 à 14, et la température du bain est de 50°C.

Les plaques d'acier électrozingué sont, de la même manière qu'aux exemples précédents, rincées, à l'eau froide déminéralisée, puis séchées à 125°C pendant 4 minutes.

Les plaques dégraissées, rincées et séchées, sont ensuite soumises à un traitement d'activation par immersion dans un bain à la température ambiante, de composition AFZ2 pendant une minute.

Les plaques sont ensuite séchées en étuve ("flash off") pendant 2 minutes à 125°C.

Puis, on applique, dans les cinq minutes qui suivent le séchage, la composition de primaire 1, formant ainsi à la surface de la plaque un film ayant une épaisseur humide de l'ordre de 10-12µm. Puis les plaques revêtues de primaire sont ensuite soumises au même traitement de finition que pour l'exemple 1

### EXEMPLE COMPARATIF 4

A titre comparatif, par rapport à l'exemple 4, on applique sur des plaques en acier électrozingué, le même revêtement protecteur que celui de l'exemple 4, en procédant de la même manière qu'à l'exemple 4, hormis l'étape d'immersion dans le bain de composition AFZ2 à base d'acide fluorozirconique, qui a été supprimée. La comparaison des résultats au test du brouillard salin (après une exposition de 150 heures au brouillard salin) des exemples 4 et C4 est illustrée par la figure 9. Cette figure montre que la tenue à la corrosion est significativement meilleure lorsqu'il y a un traitement d'activation préalable à l'aide d'une composition à base d'un fluoroacide métallique.

### EXEMPLE 5

Des plaques en acier électrozingué sont dégraissées par immersion pendant 5 secondes dans un bain comprenant 3,75% en poids de Chemetall Parco 305E® par rapport au poids total du bain. Le pH est, comme pour les exemples précédents, de 13 à 14, et la température du bain est de 50°C.

Les plaques d'acier électrozingué sont, de la même manière qu'aux exemples précédents, rincées, à l'eau froide déminéralisée, puis séchées à 125°C pendant 4 minutes.

Les plaques dégraissées, rincées et séchées, sont ensuite soumises à un traitement d'activation par application au rollcoater dans un bain à la température ambiante, de composition AFZ2 pendant une minute.

Les plaques sont ensuite séchées en étuve ("flash off") pendant 2 minutes à 125°C.

Puis, on applique ensuite, dans les cinq minutes qui suivent le séchage, la composition de primaire suivant, formant ainsi à la surface de la plaque un film humide de primaire ayant une épaisseur de l'ordre de 6 µm :

| Rom UV:SM1530/140B | | |
|---|---|---|
| | | |
| Duroxyne VAX6127 | | 18 |
| Eau | | 4,3 |
| Antimousse byk 028 | | 0,1 |
| TEA | | 1 |
| Schieldex C303 | | 3,6 |
| K wite ktc 720 | | 1,8 |
| | | |
| Ucecoat DW7770 | | 72 |
| Byk 346 | | 0,3 |
| Irgacure 500 | | 1 |
| Schwego pur | | 0,4 |

Les plaques ainsi revêtues reçoivent ensuite par électrodéposition cathodique un film de 20 microns d'épaisseur sèche du primaire anticorrosion W780-9735 de PPG

Un test de tenue à la corrosion VDA 621-41, un test de tenue au dégraissage alcalin et un test Erichsen sont ensuite réalisés sur ces plaques.

### EXEMPLE COMPARATIF C5

A titre comparatif, par rapport à l'exemple 5, on applique sur des plaques en acier électrozingué, le même revêtement protecteur que celui de l'exemple 5, en procédant de la même manière qu'à l'exemple 5, hormis l'étape d'immersion dans le bain de composition AFZ2 à base d'acide fluorozirconique, qui a été supprimée

### Tenue à la corrosion VDA 621-415

| | Exemple C5 | Exemple 5 |
|---|---|---|
| Rouille Rouge | 30% | 0-1 % |
| Rouille blanche | 60% | 15% |

### Tenue dégraissage

| Exemple C5 | Exemple 5 |
|---|---|
| Detrempe complete | Bonne tenue |

### Adhérence erichsen

| Exemple 5 | Exemple C5 |
|---|---|
| 3-4 | 0-1 |

La comparaison des résultats montrent que l'activation (exemple 5) confère une tenue à la corrosion, une tenue au dégraissage alcalin et une adhérence au substrat très significativement supérieurs.

Ceci peut être observé sur les figures 9 et 10.

## Revendications

1. Procédé pour l'obtention d'un substrat métallique comportant un revêtement protecteur, ledit substrat étant à base de fer tel que l'acier, l'acier galvanisé ou l'acier électrozingué, ou à base d'aluminium ou de ses alliages, ledit procédé comportant les étapes suivantes :
(a) dégraissage du substrat à l'aide d'une solution alcaline, cette étape étant facultative lorsque le traitement est effectué directement sur une ligne de galvanisation ou d'électrozinguage en continu ;
(b) rinçage à l'eau, de préférence déminéralisée ;
(c) activation du substrat métallique à l'aide d'une composition d'activation à base d'au moins un fluoroacide métallique ;
(d) séchage du substrat métallique ;
(e) application d'une composition aqueuse de primaire susceptible d'être polymérisée par irradiation au moyen d'un rayonnement UV ou par bombardement électronique pour former un film de composition aqueuse de primaire d'au moins 1 µm d'épaisseur, et de préférence de 3 à 5 µm d'épaisseur, ladite composition de primaire comprenant :
un liant polymérique comportant :
- 40 à 85 % en poids par rapport au poids total de ladite composition de primaire d'au moins une résine polymère insaturée contenant au moins un groupement acrylate et susceptible d'être polymérisée par irradiation au moyen d'un rayonnement UV ou par bombardement électronique ;
- 5 à 50 % en poids par rapport au poids total de ladite composition de primaire d'au moins une résine polymère saturée ne contenant pas de groupement acrylate ; et
- dans le cas où la polymérisation est réalisée par irradiation au moyen d'une irradiation UV, 1 à 10 % en poids par rapport au poids de ladite composition de primaire d'au moins un photoinitiateur ;
une pâte pigmentaire comportant :
- un liant de broyage,
- 1 à 20 % en poids par rapport au poids total de ladite composition de primaire d'au moins un pigment inhibiteur de corrosion, et
- de manière facultative, au moins une charge, et
de l'eau, de préférence, déminéralisée, comme milieu de dispersion de ladite composition de primaire,
(f) traitement thermique pour éliminer l'eau résiduelle du film de composition aqueuse de primaire, et
(g) réticulation du film de composition aqueuse de primaire pour obtenir un film de primaire ayant, après réticulation, une épaisseur d'au moins 1 µm, et de préférence de 3 à 5 µm.

2. Procédé selon la revendication 1, **caractérisé en ce que** l'étape (a) de dégraissage du substrat est réalisée à l'aide d'une solution alcaline ayant un pH égal ou supérieur à 12, de préférence de l'ordre de 13.

3. Procédé selon la revendication 1 ou 2, **caractérisé en ce que** la solution alcaline utilisée dans l'étape (a) de dégraissage du substrat est une solution à base d'hydroxyde de potassium ou d'hydroxyde de sodium.

4. Procédé selon l'une quelconque des revendications 1 à 3, **caractérisée en ce que** l'étape (a) de dégraissage du substrat est réalisée par immersion dans un bain de ladite solution alcaline, dont la température varie de 55 à 60°C.

5. Procédé selon l'une quelconque des revendications précédentes, **caractérisé en ce que** le fluoroacide métallique de la composition d'activation de l'étape (c) d'activation est choisi parmi l'acide fluorozirconique, l'acide fluorotitanique et l'acide fluorosilicilique.

6. Procédé selon la revendication 5, **caractérisé en ce que** le fluoroacide est l'acide fluorozirconique.

7. Procédé selon la revendication 6, **caractérisé en ce que** l'acide fluorozirconique est présent à raison de 0,1 g/l à 20 g/l par rapport au poids de la composition d'activation.

8. Procédé selon la revendication 6 ou 7, **caractérisé en ce que** l'acide fluorozirconique est associé à une résine à structure époxydique, de préférence une résine dérivée de polyépoxyde, notamment de bisphénol A.

9. Procédé selon l'une quelconque des revendications précédentes **caractérisé en ce que** la résine polymère insaturée contenant au moins un groupement acrylate de la composition de primaire de l'étape e) est une résine choisie parmi les résines époxy-acrylates, les uréthanes-acrylates, les polyesters-acrylates, les polyesters-uréthanes-acrylates, les éthers acrylates, les amines acrylates et leurs mélanges.

10. Procédé selon la revendication 9, **caractérisé en ce que** la résine polymère insaturée contenant au moins un groupement acrylate est une résine uréthane-acrylate.

11. Procédé selon l'une quelconque des revendications précédentes **caractérisé en ce que** la résine polymère saturée ne contenant pas de groupement acrylate de la composition de primaire de l'étape e) est choisie parmi les dispersions ou les émulsions de résines acryliques, acryliques styrènées, acryliques-uréthanes, et polyesters.

12. Procédé selon l'une quelconque des revendications précédentes, **caractérisé en ce que** le photoinitiateur de la composition de primaire de l'étape e) est choisi parmi les benzyl cétones, les dialkyl acétophénones, les α-hydroxy alkylphénones, les oxydes d'acylphosphines, et la benzophénone.

13. Procédé selon l'une quelconque des revendications précédentes, **caractérisé en ce que** le liant de broyage de la composition de primaire de l'étape e) est constitué par la résine polymère saturée ne contenant pas de groupement acrylate de ladite composition de primaire.

14. Procédé selon l'une quelconque des revendications précédentes, **caractérisé en ce que** le (ou les) pigments inhibiteurs de la pâte pigmentaire de la composition de primaire est (ou sont) choisi(s) parmi les chromates, les phosphates, les borates, les molybdates et les silicates de calcium.

15. Procédé selon l'une quelconque des revendications précédentes, **caractérisé en ce que** la composition de primaire présente une concentration pigmentaire en volume CPV de pigment(s) inhibiteur(s ) pouvant varier de 0,1 à 0,25, et de préférence de 0,1 à 0,15.

16. Procédé selon l'une quelconque des revendications précédentes, **caractérisé en ce que** le (ou les) pigments inhibiteurs de la pâte pigmentaire de la composition de primaire est (ou sont) associé(s) à un ou plusieurs inhibiteur(s) de corrosion sous forme liquide.

17. Procédé selon la revendication 16, **caractérisé en ce que** le (ou les) inhibiteur(s) de corrosion sous forme liquide est (ou sont) choisi(s) parmi les solutions aqueuses d'acide 1 -(benzothiazol-2-ylthio)succinique et les solutions aqueuses d'éthylène méthacrylate phosphate.

18. Procédé selon l'une quelconque des revendications précédentes, **caractérisé en ce que** la réticulation de l'étape g) est réalisée sous lampe UV sous azote avec un taux d'oxygène inférieur à 200 ppm.

19. Procédé selon l'une quelconque des revendications précédentes, **caractérisé en ce qu'**il comprend, postérieurement à l'étape de réticulation g) du film de composition aqueuse de primaire, une étape de finition h), comprenant :
• l'application d'une composition de finition sur le film de primaire, suivie de
• la réticulation de ladite composition de finition pour obtenir un revêtement de finition.

20. Procédé selon la revendication 19, **caractérisé en ce que** la finition de l'étape h) est une finition comprenant :
l'application d'une composition de finition à base de polyester-mélanine, ou de polyester-uréthane, ou de polyvinyldifluoré, suivie de
la réticulation de ladite composition de finition, par chauffage dans un four à une température située dans la gamme de température 240-250°C, pour obtenir un revêtement de finition réticulé.

21. Procédé selon la revendication 19, **caractérisé en ce que** la finition de l'étape h) est une finition à froid comprenant :
l'application d'une composition de finition à base d'uréthane-acrylate, suivie de
la réticulation de ladite composition de finition par bombardement électronique, pour obtenir un revêtement de finition.
